# EUROPÄISCHE PATENTSCHRIFT

(11) **EP 0 957 312 B1**
(45) Veröffentlichungstag und Bekanntmachung des Hinweises auf die Patenterteilung: **03.12.2003**
(21) Anmeldenummer: 99107922.9
(22) Anmeldetag: 22.04.1999
(51) Int. Cl.: F23J 13/04, F16L 21/02

(54) **Vorrichtung zum gasdichten Anschluss eines Abgasrohrs**
Dispositif pour le branchement étanche aux gaz d'un tuyau de gaz d'échappement
Device for the gastight connection of an exhaust gas pipe

(30) Priorität: 15.05.1998 DE 29808784 U
(43) Veröffentlichungstag der Anmeldung: 17.11.1999
(73) Patentinhaber: ERLUS BAUSTOFFWERKE AG, 84088 Neufahrn (DE)
(72) Erfinder: Interwies, Jan, 84034 Landshut (DE)
(74) Vertreter: LOUIS- PÖHLAU- LOHRENTZ

(56) Entgegenhaltungen:
- EP-A- 0 931 982
- CH-A- 456 269
- CH-A- 589 247
- DE-U- 7 420 809
- DE-U- 8 909 972
- DE-U- 29 520 373
- DE-U- 29 801 063
- GB-A- 1 190 773
- GB-A- 1 365 482

## Beschreibung

Die Erfindung betrifft eine Vorrichtung zum gasdichten Anschluß eines Abgasrohrs an den Anschlußstutzen eines Rauchrohrs.

Bei einer bekannten Vorrichtung zum Verbinden einer Abgasleitung mit dem Rauchrohr eines Schornsteins ist eine Anschlußmuffe vorgesehen, die aus einer Scheibe mit einer zentralen Durchtrittsöffnung besteht, an welche am Scheibenrand eine zur Scheibenebene senkrecht stehende Manschette angeformt ist (DE 295 20 373U, EP 780 634 A2). Die Manschette kann über den Anschlußstutzen gestülpt und daran mittels einer Schlauchschelle fixiert werden. Nachteilig an dieser Anschlußmuffe ist, daß die daran vorgesehene Scheibe, die sich beim Einschieben des Abgasrohrs in die zentrale Öffnung in das Innere des AnschluBstutzens hineinverformt, zwischen der Außenfläche des Abgasrohrs und der Innenfläche des Anschlußstutzens zu liegen kommt. Wenn der Durchmesser des Abgasrohrs nur noch unwesentlich kleiner als der Innendurchmesser des Anschlußstutzens ist, dann ergibt die Dichtscheibe keine einwandfreie Abdichtung, weil sie am Eintritt in den Ringspalt zwischen dem Abgasrohr und dem Anschlußstutzen anstößt oder klemmt. Ein vorheriges Aufstecken der Anschlußmuffe auf das Abgasrohr so, daß die Dichtscheibe zum Heizgerät hin verformt wird, und ein danach folgendes Aufstülpen der Anschlußmuffe zusammen mit dem Abgasrohr auf den Anschlußstutzen ist umständlich und nur ausführbar, wenn das Abgasrohr frei handhabbar ist. Auch das Festklemmen der Anschlußmuffe auf dem Anschlußstutzen mittels einer Schlauchklemme erhöht den Arbeitsaufwand.

Weiterhin ist auch ein als Dichtung wirkendes Verbindungsstück aus einem Elastomer für Rohre mit unterschiedlichen Außendurchmessern bekannt, das auf das Ende eines Rohrs gestülpt und daran mittels einer Spannschelle dicht befestigt werden kann und an seinem anderen Ende im Inneren zwei in axialer Richtung distanzierte ringförmige Dichtlippen aufweist, die sich an der Außenseite eines in das Verbindungsstück einzuschiebenden anderen Rohrendes dichtend anlegen (DE 89 09 972 U). Die Notwendigkeit, das eine Ende des Verbindungsstücks an dem zugeordneten Rohrende mittels einer Spannschelle zu befestigen, erhöht auch hier den Arbeitsaufwand beim Verbinden zweier Rohre miteinander. Darüber hinaus muß das Anbringen und Anziehen der Spannschelle insbesondere bei dünnwandigen Rohren mit Sorgfalt erfolgen, weil leicht bei einem zu starken Spannen der Spannschelle die Rohrwandung brechen kann.

Stand der Technik gemäß Art. 54 Abs. 3 EPÜ ist auch eine Lippendichtung aus elastomerem Material, die zur Abdichtung der Verbindungsstelle von Muffenrohr-Abschnitten eines Kamin-Rauchrohrs dient (EP 99 100 807.9). Der Trägerkörper der Lippendichtung umgreift die Muffe auf deren Außenseite und umschließt diese mit Spannung abdichtend. Ein axial überstehender Abschnitt des Trägerkörpers weist zumindest eine Dichtlippe auf, die zur Abdichtung des nächstfolgenden Muffenrohr-Abschnitts dient. Über die Lage der Dichtlippe relativ zur Muffe ist nichts mitgeteilt.

Der Erfindung liegt daher die Aufgabe zugrunde, eine Vorrichtung zum Anschließen eines Abgasrohrs zu schaffen, die den Anschluß auch solcher Abgasrohre gestattet, deren Durchmesser sich dem Innendurchmesser des Anschlußstutzens nähert, und die darüber hinaus einfacher an dem Anschlußstutzen festgelegt werden kann.

Erfindungsgemäß wird diese Aufgabe gelöst durch eine Vorrichtung gemäß Anspruch 1.

Die erfindungsgemäße Anschlußvorrichtung weist als Dichtelement, das sich an der Außenfläche des Abgasrohrs dichtend anlegt, mindestens eine Dichtlippe, vorzugsweise zwei Dichtlippen, auf, die im montierten Zustand der Vorrichtung an dem Anschlußstutzen einen solchen Abstand von dem Stirnrand des Anschlußstutzens einhält, daß sie in Richtung auf diesen verformt werden kann, ohne in den Ringspalt zwischen der Außenfläche des Abgasrohrs und dem Innenumfang des Anschlußstutzens hineinzuragen oder am Stirnrand des Anschlußstutzens anzustoßen. Die für eine einwandfreie Abdichtung notwendige Verformung der Dichtlippe wird somit nicht behindert. Deshalb kann mit der erfindungsgemäßen Vorrichtung auch noch ein Abgasrohr angeschlossen werden, dessen Außendurchmesser praktisch gleich groß wie der Innendurchmesser des Anschlußstutzens ist, das heißt gerade noch in diesen hineingeschoben werden kann. Zweckmäßigerweise ist der erforderliche Abstand der Dichtlippe, der von der radialen Erstreckung der Dichtlippe abhängt, durch einen Anschlag festgelegt, der beim Aufschieben der Vorrichtung auf den Anschlußstutzen an dessen Stirnrand anschlägt.

Die Dichtlippe ist an einem zylindrischen Haltekörper angeordnet, der aufgrund seiner Wanddicke hinreichend stabil ist, um über die Dichtlippen das Abgasrohr tragen zu können, wobei sein auf den Anschlußstutzen aufzusteckender Endabschnitt hinreichend elastisch verformbar sein kann, um gegebenenfalls auch ohne zusätzliche Befestigung darauf zu halten und zugleich den Anschlußstutzen abzudichten. Die elastische Verformung kann durch die Materialwahl des Haltekörpers bei gleichbleibender Wandung erzielt werden; zweckmäßig ist es jedoch, die Wanddicke des auf den Anschlußstutzen aufzusteckenden Endabschnitts geringer und damit leichter verformbar zu wählen. Es kann daran gedacht sein, an dem Innenumfang des aufzusteckenden Endabschnitts Stützrippen vorzusehen, die schraubenförmig oder als umlaufende Ringrippen gestaltet sind und die elastische Verformung erfahren, die für die Halterung und Abdichtung der Vorrichtung auf dem Anschlußstutzen ausgenützt wird. Es ist aber auch eine Ausführungsform möglich, bei welcher der Innenumfang des auf den Anschlußstutzen aufzusteckenden Endabschnitts sich vom Abschnittrand her nach innen konisch verjüngt, so daß der Haltekörper zunächst unschwierig auf den Rand des Anschlußstutzens aufgeschoben werden kann, sich jedoch bei einem weiteren Aufschieben durch die Keilwirkung der Verjüngung eine elastische Aufweitung des Endabschnitts und eine damit einhergehende Anpressung an den Anschlußstutzen mit gasdichter Abdichtung einstellt.

Weitere Vorteile und Merkmale der Erfindung ergeben sich aus der nachfolgenden Beschreibung von Ausführungsbeispielen anhand der beiliegenden Zeichnungen sowie aus weiteren Unteransprüchen. In den Zeichnungen zeigen:
Fig. 1 einen Axialschnitt durch einen Rauchrohrabschnitt mit einem seitlich gerichteten Anschlußstutzen und daran montierter Anschlußvorrichtung, und
Fig. 2 in vergrößertem Maßstab einen Teil des Anschlußstutzens mit einer daran festgelegten, gegenüber Fig. 1 abgewandelten Ausführungsform einer Anschlußvorrichtung, und
Fig. 3 eine zu Fig. 2 analoge Darstellung mit einer weiteren abgewandelten Ausführungsform einer Anschlußvorrichtung.

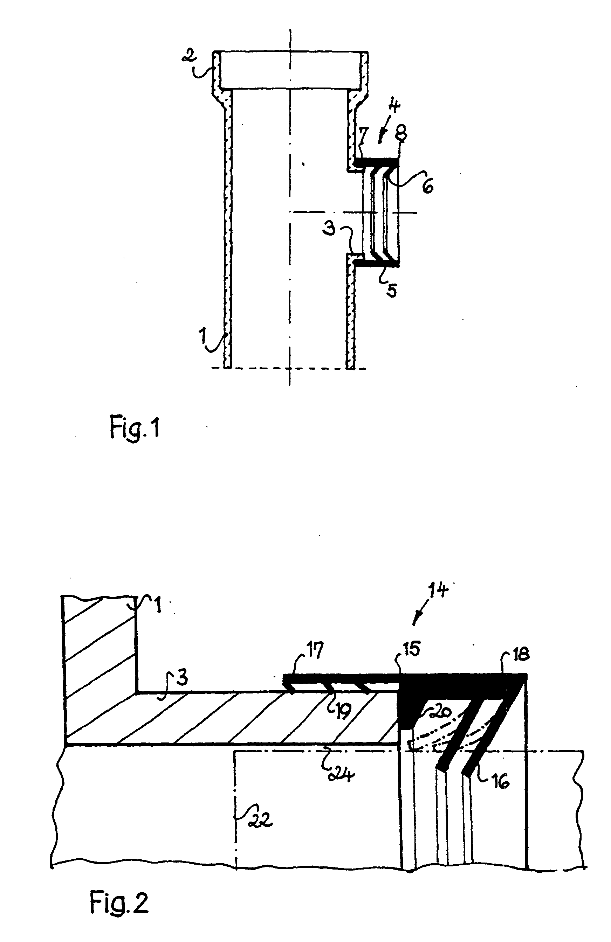

Der in Fig. 1 gezeigte Rauchrohrabschnitt 1 aus keramischem Material weist an seinem oberen Ende eine Muffe 2 zur Verbindung mit einem nächstfolgenden Rauchrohrabschnitt sowie einen quer zur Längsachse seitlich ausragenden Anschlußstutzen 3 auf. Auf den Anschlußstutzen 3 ist eine im ganzen mit 4 bezeichnete Anschlußvorrichtung aufgesteckt, die dazu dient, ein nicht gezeigtes Abgasrohr einer Heizeinrichtung oder eines Brennwertgeräts aufzunehmen und an dessen Umfangsfläche abzudichten. Die Anschlußvorrichtung 4 besteht im wesentlichen aus einem hohlzylindrischen Haltekörper 5 aus einem elastomeren und im Hinblick auf die auftretenden Temperaturen wärmebeständigen Kunststoff sowie zwei von dessen Innenumfang schräg radial vorspringenden Dichtlippen 6. Die Dichtlippen 6 sind geschlossen umlaufend ausgebildet, wobei sie aufgrund ihrer Schrägstellung kegelschalenförmig sind, und sind durch entsprechende Wahl ihrer Dicke elastisch verformbar. Der Haltekörper 5 weist eine Wandstärke auf, die ihn hinreichend stabil macht, um aufgrund der elastischen Verformung seines auf den Anschlußstutzen 3 aufgedrückten Endabschnitts 7 darauf klemmend zu halten.

Wie aus Fig. 1 hervorgeht, stößt der Haltekörper 5 mit seinem dem Rauchrohrabschnitt 1 zugewendeten Stirnrand an diesem an. Die Dichtlippen 6 sind in dem gegenüberliegenden Endabschnitt 8 so angeordnet, daß sie bis zur Anlage an dem Innenumfang des Haltekörpers 5 elastisch verformt werden können, ohne mit dem Anschlußstutzen 3 in Berührung zu kommen. Daher läßt sich in die Anschlußvorrichtung 4 ein Abgasrohr einschieben, dessen Außendurchmesser fast so groß wie der Innendurchmesser des Anschlußstutzens 3 ist, wobei die Dichtlippen 6 gasdicht an der Außenfläche des Abgasrohrs anliegen.

Dieser Sachverhalt ist in Fig. 2 anhand einer abgewandelten Ausführungsform der Anschlußvorrichtung veranschaulicht. Diese Anschlußvorrichtung 14 weist einen Haltekörper 15 auf, der in einen aufzusteckenden Endabschnitt 17 und einen die Dichtlippen 16 tragenden Endabschnitt 18 unterteilt ist. Der aufsteckbare Endabschnitt 17 hat eine deutlich geringere Wandstärke als der Endabschnitt 18, trägt jedoch an seinem Innenumfang drei umlaufende Stützrippen 19, die schon im unverformten Zustand schräg zu dem Abschnitt 18 hin gerichtet sind. Der Endabschnitt 17 und die daran vorgesehenen Stützrippen 19 erfahren beim Aufstecken der Anschlußvorrichtung 14 auf den Anschlußstutzen 3 gemeinsam eine elastische Verformung, durch die die Anschlußvorrichtung 14 festgehalten ist. Dabei erzeugen die Stützrippen 19 einen Widerhakeneffekt auf der mehr oder weniger rauhen Außenfläche des Anschlußstutzens 3.

Am Übergang des aufsteckbaren Endabschnitts 17 zu dem vorderen Endabschnitts 18 ist ein Anschlag 20 vorgesehen, der am Stirnrand des Anschlußstutzens 3 anliegt. Der Anschlag 20 kann als umlaufende Rippe ausgebildet sein, die in Verbindung mit dem aufsteckbaren Endabschnitt 17 und den daran vorgesehenen Stützrippen 19 für die erforderliche Abdichtung der Anschlußvorrichtung 14 sorgt. Wenn die Stützrippen 19 allein eine hinreichende Abdichtung bewirken, kann der Anschlag 20 durch wenige, zum Beispiel vier, auf dem Innenumfang des Endabschnitts 18 verteilte Höcker gebildet sein.

Der Anschlag 20 bestimmt den Abstand, den die Dichtlippen 16 im montierten Zustand der Anschlußvorrichtung 14 von dem Stirnrand des Anschlußstutzens 3 einhalten. Die Dichtlippen 16 sind bereits im unverformten Zustand (der in Fig. 2 ausgezogen gezeichnet ist) schräg radial in Richtung zu dem Endabschnitt 17 geneigt. Wenn ein strichpunktiert angedeutetes Abgasrohr 22, dessen Außendurchmesser nahezu gleich dem Innendurchmesser des Anschlußstutzens 3 ist, in die Anschlußvorrichtung 14 eingeschoben wird, dann erfahren die Dichtlippen 16 die strichpunktiert angedeutete Verformung. Sie liegen dabei gasdicht an der Außenfläche des Abgasrohrs 22 an, bleiben jedoch mit ihren freien Rändern vor dem Eintritt in den Ringspalt 24 zwischen dem Anschlußstutzen 3 und dem Abgasrohr 22. Ihre Verformung und das dichtende Anliegen an dem Abgasrohr 22 werden daher nicht behindert.

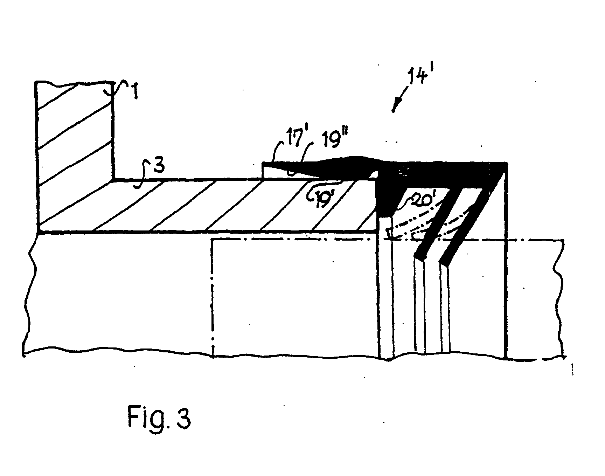

Die Anschlußvorrichtung 14' gemäß Fig. 3 unterscheidet sich von der Ausführungsform gemäß Fig. 2 durch die Ausbildung des aufsteckbaren Endabschnitts 17'. Dieser weist in einem aus Fig. 3 ersichtlichen Abstand vor dem Anschlag 20' an seiner inneren Umfangsfläche eine ringförmige Verdickung 19' auf, deren Innendurchmesser im (nicht gezeigten) unverformten Zustand kleiner als der Außendurchmesser des Anschlußstutzens 3 ist. Von der Verdickung 19' aus verringert sich die Wandstärke des Endabschnitts 17' zu dessen freiem Rand hin in einem Ausmaß, daß an dem freien Rand der Innendurchmesser des Endabschnitts 17' den Außendurchmesser des Anschlußstutzens 3 übersteigt. Die Verjüngung ist gleichförmig und erzeugt dadurch eine glatte kegelförmige Aufsteck- und Aufweitfläche 19''. Diese erzeugt beim Aufsteckvorgang an der freien Kante des Anschlußstutzens 3 eine Keilwirkung und eine entsprechende Aufweitkraft, durch die der Endabschnitt 17' im Bereich der Verdickung 19' elastisch aufgeweitet wird und daher bis zum Anschlag 20' auf den Anschlußstutzen 3 aufgeschoben werden kann. Die Verdickung 19' wird durch die so erzeugte elastische Ringspannung fest und abdichtend auf die Außenfläche des Anschlußstutzens gepreßt und fixiert zugleich die Anschlußvorrichtung 14'. In Fig. 3 ist die in diesem Zustand durch die Aufweitung der Verdickung 19' eintretende Auswölbung des Endabschnitts 17' im Bereich der Verdickung 19' dargestellt.

Anstelle der in einem Abstand vor dem Anschlag 20' angeordneten örtlichen Verdickung 19' kann diese auch ohne Zwischenraum unmittelbar bis zum Anschlag 20' verlaufen und in diesen übergehen. Zur Erleichterung des Aufsteckvorgangs kann auch die Aufsteckfläche 19'' härter ausgebildet oder mit einer härteren Gleitschicht kaschiert sein.

Der Haltekörper 5,15 kann durch eine nicht gezeigte Einlage aus Metall verstärkt sein, welche die gewünschte elastische Verformung mit ausführt und die Haltekraft der Anschlußvorrichtung auf dem Anschlußstutzen verstärkt. Es kann aber auch daran gedacht sein, die Wandung des aufsteckbaren Endabschnitts 7,17 des Haltekörpers nur wenig elastisch verformbar auszubilden und die erforderliche elastische Verformbarkeit weitestgehend in die vorhandenen Stützrippen zu verlagern. Die Stützrippen können hierzu mit einem Querschnitt versehen sein, der die elastische Verformbarkeit und die daraus resultierende Abdichtfunktion unterstützt. Beispielsweise können die Stützrippen von der Innenwand des Endabschnitts ausgehend sich in radialer Richtung verjüngen und zu einer schmalen freien Kante auslaufen, so daß der Querschnitt der Stützrippen dadurch dreieck- oder trapezförmig ist.

## Patentansprüche

1. Rohreinrichtung
mit einem Rauchrohr (1) mit seitlich gerichtetem Anschlußstutzen (3), einem an den Anschlußstutzen (3) montierten Abgasrohr (2) und
einer Vorrichtung zum gasdichten Anschluß des Abgasrohrs (2) an dem seitlichen Anschlußstutzen (3) des Rauchrohrs (1) mit einem aus
elastomerem Material bestehenden hohlzylindrischen Haltekörper (5, 15), in den das Abgasrohr (2) eingesteckt ist,
wobei der eine Endabschnitt (8, 18) des hohlzylindrischen Haltekörpers (5, 15) mindestens eine ringförmige, radial nach innen ragende Dichtlippe (6, 16) trägt, die bei eingestecktem Abgasrohr (2) unter gasdichter Anlage an der Außenfläche des Abgasrohrs anliegt und,
wobei der andere Endabschnitt (8, 18) des hohlzylindrischen Haltekörpers (5,15) unter elastischer Verformung auf den Anschlußstutzen (3), diesen abdichtend umgreifend aufgesteckt ist,
wobei vorgesehen ist,
daß zwischen dem Abgasrohr (22) und dem Anschlußstutzens (3) ein Ringspalt (24) ausgebildet ist, und
daß die Dichtlippe (6, 16) so bemessen ist, daß Abgasrohre unterschiedlicher Außendurchmesser einsetzbar sind und zwar auch mit Außendurchmesser, die sich dem Innendurchmesser des AnschlußStutzens (3) nähern bis nahezu gleich groß wie dieser sind und dabei jeweils die im montierten Zustand gasdicht an der Außenfläche des Abgasrohrs (22) anliegende Dichtlippe (16) zum Stirnrand des Anschlußstutzens (3) ausgelenkt ist, jedoch mit ihrem freien Rand vor dem Eintritt in den Ringspalt (24) zwischen dem Anschlußstutzen (3) und dem Abgasrohr (33) verbleibt.

2. Vorrichtung nach Anspruche 1,
**dadurch gekennzeichnet,**
**daß** der genannte Abstand durch einen Anschlag (20) an dem Haltekörper (5,15) bestimmt ist.

3. Vorrichtung nach Anspruch 2,
**dadurch gekennzeichnet,**
**daß** der Anschlag durch den freien Rand des aufsteckbaren Endabschnitts (7) gebildet ist.

4. Vorrichtung nach Anspruch 2,
**dadurch gekennzeichnet,**
**daß** der Anschlag durch einen Vorsprung (20) der Innenfläche des Haltekörpers gebildet ist.

5. Vorrichtung nach Anspruch 4,
**dadurch gekennzeichnet,**
**daß** der Anschlag (20) eine umlaufende, abdichtend an dem Stirnrand des Anschlußstutzens anliegende Ringrippe ist.

6. Vorrichtung nach einem der Ansprüche 1 bis 5,
**dadurch gekennzeichnet,**
**daß** der aufsteckbare Endabschnitt (17) radial nach innen vorspringende, elastisch verformbare Stützrippen (19) trägt.

7. Vorrichtung nach Anspruch 6,
**dadurch gekennzeichnet,**
**daß** die Stützrippen ringförmig sind und im unverformten Zustand schräg zu den Dichtlippen (16) hin gerichtet sind.

8. Vorrichtung nach Anspruch 6 oder 7,
**dadurch gekennzeichnet,**
**daß** die Dichtlippe (16) im unverformten Zustand schräg zu den Stützrippen (19) hin gerichtet ist.

9. Vorrichtung nach einem der Ansprüche 6 bis 8,
**dadurch gekennzeichnet,**
**daß** die Stützrippen (19) im montierten Zustand der Anschlußvorrichtung abdichtend an dem Außenumfang des Anschlußstutzens (3) anliegen.

10. Vorrichtung nach einem der Ansprüche 1 bis 5,
**dadurch gekennzeichnet,**
**daß** der aufsteckbare Endabschnitt (17') an seiner inneren Umfangsfläche eine ringförmige Verdickung (19') aufweist, deren Durchmesser im unverformten Zustand geringer als der Außendurchmesser des Anschlußstutzens (3) ist, und daß ausgehend von der Verdickung (19') sich eine Aufsteckfläche (19'') zu dem freien Rand des Endabschnitts (17') erstreckt.

11. Vorrichtung nach Anspruch 10,
**dadurch gekennzeichnet,**
**daß** die Aufsteckfläche (19'') sich konisch zu dem freien Rand des Endabschnitts (17') erweitert und daß der Durchmesser des Endabschnitts (17') an dessen freiem Rand größer als der Außendurchmesser des Anschlußstutzens (3) ist.

12. Vorrichtung nach Anspruch 10 oder 11,
**dadurch gekennzeichnet,**
**daß** die Verdickung (19') in einem Abstand von dem einen Anschlag bildenden Vorsprung (20') ausgebildet ist.

## Claims

1. Pipe device, with a smoke pipe (1) having a laterally directed connection piece (3), with an exhaust pipe (2) mounted on the connection piece (3) and with a device for the gas-tight connection of the exhaust pipe (2) to the lateral connection piece (3) of the smoke pipe (1) by means of a hollow-cylindrical holding body (5, 15) which consists of elastomeric material and into which the exhaust pipe (2) is inserted, one end portion (8, 18) of the hollow-cylindrical holding body (5, 15) carrying at least one annular radially inward-projecting sealing lip (6, 16) which, with the exhaust pipe (2) inserted, comes to bear in a gas-tight manner against the outer surface of the exhaust pipe, and the other end portion (8, 18) of the hollow-cylindrical holding body (5, 15) being slipped, with elastic deformation, onto the connection piece (3) so as to sealingly surround the latter, there being provision for an annular gap (24) to be formed between the exhaust pipe (22) and the connection piece (3) and for the sealing lip (6, 16) to be dimensioned such that exhaust pipes of different outside diameters can be inserted, specifically even with outside diameters which are close to virtually equal to the inside diameter of the connection piece (3), and at the same time, in each case, the sealing lip (16), which comes to bear in a gas-tight manner against the outer surface of the exhaust pipe (22) in the mounted state, being deflected towards the front edge of the connection piece (3), but remaining with its free edge in front of the entry into the annular gap (24) between the connection piece (3) and the exhaust pipe (33).

2. Device according to Claim 1, **characterized in that** the said distance is determined by a stop (20) on the holding body (5, 15).

3. Device according to Claim 2, **characterized in that** the stop is formed by the free edge of the slip-on end portion (7).

4. Device according to Claim 2, **characterized in that** the stop is formed by a projection (20) of the inner surface of the holding body.

5. Device according to Claim 4, **characterized in that** the stop (20) is a peripheral annular rib bearing sealingly against the front edge of the connection piece.

6. Device according to one of Claims 1 to 5, **characterized in that** the slip-on end portion (17) carries radially inward-projecting elastically deformable supporting ribs (19).

7. Device according to Claim 6, **characterized in that** the supporting ribs are annular and, in the non-deformed state, are directed obliquely towards the sealing lips (16).

8. Device according to Claim 6 or 7, **characterized in that**, in a non-deformed state, the sealing lip (16) is directed obliquely towards the supporting ribs (19).

9. Device according to one of Claims 6 to 8, **characterized in that**, in the mounted state of the connecting device, the supporting ribs (19) bear sealingly against the outer circumference of the connection piece (3).

10. Device according to one of Claims 1 to 5, **characterized in that** the slip-on end portion (17') has, on its inner circumferential surface, an annular thickening (19'), the diameter of which, in the non-deformed state, is smaller than the outside diameter of the connection piece (3), and **in that**, starting from the thickening (19'), a slip-on surface (19'') extends to the free edge of the end portion (17').

11. Device according to Claim 10, **characterized in that** the slip-on surface (19'') widens conically toward the free edge of the end portion (17'), and **in that** the diameter of the end portion (17') at its free edge is larger than the outside diameter of the connection piece (3).

12. Device according to Claim 10 or 11, **characterized in that** the thickening (19') is formed at a distance from the projection (20') forming a stop.

## Revendications

1. Dispositif tubulaire du type comportant un tube de fumée (1) équipé d'embouts de réunion (3) montés latéralement, d'un tube de gaz effluents (2) monté sur les embouts de réunion (3) et d'un dispositif pour la réunion étanche aux gaz du tube de gaz effluents (2) sur les embouts de réunion latéraux (3) du tube de fumée (1) avec un corps porteur cylindrique creux réalisé en un matériau élastomère (5, 15) enfoncé dans le tube de gaz effluents (2), l'une des sections terminales (8, 18) du corps porteur cylindrique creux (5, 15) comportant au moins une lèvre d'étanchéité (6, 16) de forme annulaire en saillie vers l'intérieur et qui, en position enfoncée du tube de gaz effluents (2) appuie hermétiquement sur la surface extérieure du tube de gaz effluents, et l'autre section terminale (8, 18) du corps porteur cylindrique creux (5, 15) étant enfilée avec déformation élastique sur les embouts de réunion (3) en accrochant hermétiquement ceux-ci, étant prévu que, entre le tube de gaz effluents (22) et l'embout de réunion (3) est créée une fente annulaire (24) et que la lèvre d'étanchéité (6, 16) est dimensionnée de manière telle que des tubes de gaz effluents de diamètres extérieurs différents peuvent être mis en place et ceci avec des diamètres extérieurs qui, par rapport au diamètre intérieur de l'embout de réunion (3) sont voisins ou jusqu'à pratiquement égaux à celui-ci, de sorte que chacune des lèvres d'étanchéité (16) repose hermétiquement à l'état monté sur la surface extérieure du tube de gaz effluents (22) jusqu'au bord frontal de l'embout de réunion (3) de manière articulée, mais demeure cependant avec son bord libre avant l'entrée de la fente annulaire (24) entre l'embout de réunion (3) et le tube de gaz effluents (33).

2. Dispositif selon la revendication 1, **caractérisé e ce que** ladite distance est déterminée par une butée (20) sur le corps porteur (5, 15).

3. Dispositif selon la revendication2, **caractérisé en ce que** la butée est constituée par le bord libre de la section terminale enfilable (7).

4. Dispositif selon la revendication 2, **caractérisé en ce que** la butée constituée par une saillie (20) sur la surface intérieure du corps porteur.

5. Dispositif selon la revendication 4, **caractérisé en ce que** la butée consiste en une nervure annulaire périphériqu reposant hermétiquement sur le bord frontal de l'embout de réunion.

6. Dispositif selon l'une quelconque des revendications 1 à 5, **caractérisé en ce que** la section terminale enfilable (17) porte des nervures d'appui déformables élastiquement faisant saillie radialement vers l'intérieur.

7. Dispositif selon la revendication 6, **caractérisé en ce que** les nervures d'appui sont de forme annulaire et sont, à l'état non déformé dirigées obliquement par rapport aux lèvres d'étanchéité (16).

8. Dispositif selon l'une des revendication 6+ ou 7, **caractérisé en ce que** la lèvre d'étanchéité (16) à l'état non déformé est dirigé obliquement par rapport aux nervures d'appui (19).

9. Dispositif selon l'une quelconque des revendications 6 à 8, **caractérisé en ce que** les nervures d'appui (19) à l'état monté du dispositif de réunion reposent de manière hermétique sur la périphérie extérieure de l'embout de réunion (3).

10. Dispositif selon l'une quelconque des revendications 1 à 5, **caractérisé en ce que** la section terminale enfilable (17) présente sur sa surface périphérique intérieure un épaississement de forme annulaire (19') dont le diamètre à l'état non déformé est plus petit que le diamètre extérieur de l'embout de réunion (3) et **en ce que**, partant de l'épaississement (19'), s'étend une surface d'enfilage (19") vers le bord libre de la section terminale (17').

11. Dispositif selon la revendication 10, **caractérisé en ce que** la surface d'enfilage (19") s'évase coniquement vers le bord libre de la section terminale (17') et **en ce que** le diamètre de la section terminale (17'), sur ce bord libre, est plus grand que le diamètre extérieur de l'embout de réunion (3).

12. Dispositif selon l'une des revendications 10 ou 11, **caractérisé en ce que** l'épaississement (19') est réalisé à une certaine distance de la saillie (20') constituant la butée.
